# EUROPÄISCHE PATENTSCHRIFT

(11) **EP 3 787 448 B1**
(45) Veröffentlichungstag und Bekanntmachung des Hinweises auf die Patenterteilung: **09.03.2022**
(21) Anmeldenummer: 20704201.1
(22) Anmeldetag: 30.01.2020
(51) Int. Cl.: A47J 42/38

(54) **VERFAHREN ZUM AUFBEREITEN VON KÖRNIGEM MAHLGUT ODER MAHLGUTMISCHUNGEN**
METHOD FOR THE TREATMENT OF GRANULAR GRINDING STOCK OR GRINDING STOCK MIXTURES
PROCÉDÉ POUR PRÉPARER DE LA MATIÈRE À MOUDRE GRANULAIRE OU DES MÉLANGES DE MATIÈRE À MOUDRE

(30) Priorität: 04.03.2019 DE 102019105427
(43) Veröffentlichungstag der Anmeldung: 10.03.2021
(73) Patentinhaber: Mock, Wolfgang, 64853 Otzberg-Langfeld (DE)
(72) Erfinder: Mock, Wolfgang, 64853 Otzberg-Langfeld (DE)
(74) Vertreter: Kruspig, Volkmar
(86) Internationale Anmeldenummer: PCT/EP2020/052201
(87) Internationale Veröffentlichungsnummer: WO 2020/177955

(56) Entgegenhaltungen:
- WO-A1-2005/003022
- US-A1- 2018 000 108
- US-A1- 2018 055 288

## Beschreibung

Die Erfindung betrifft ein Verfahren zum Aufbereiten von körnigem Mahlgut oder Mahlgutmischungen mittels gesteuerter mechanischer Zerkleinerung durch ein Mahlwerk oder eine Kombination mehrerer Mahlwerke gemäß Anspruch 1.

Aus der US 7 464 888 B2 ist eine automatische Dosierungseinheit zum Abgeben eines teilchenförmigen Produktes, zum Beispiel Kaffee, in eine Sammeleinheit vorbekannt, wobei die Dosierungseinheit eine zum Mahlen eines Produktes wirksame Mahlvorrichtung und eine Identifizierungsvorrichtung zum Erkennen der Größe der Sammeleinheit aufweist.

Die US 2018/055288 A1 offenbart eine Vorrichtung zum Aufbereiten von körnigem Mahlgut mittels gesteuerter, mechanischer Zerkleinerung durch ein Mahlwerk, wobei das Mahlwerk in einem Gehäuse befindlich ist, wobei im Gehäuse ein Mahlgut-Aufgabetrichter und eine Mahlwerk-Steuereinheit vorgesehen sind, wobei die Mahlwerk-Steuereinheit eine erste Schnittstelle zum drahtlosen Einlesen von Daten aus einem externen Datenspeicher aufweist, und wobei eine zweite Schnittstelle zur Verbindung mit einem WLAN ausgebildet ist, um Daten zu einem Server zu übertragen.

Bei dem Verfahren zum Brühen eines Getränkes mittels Brühvorrichtung gemäß US 9 591 862 B2 wird ein Brührezept, basierend auf einer Auswahl von Brührezepten abgerufen und die Pumpendauer, basierend auf einem Zielfluidvolumen, welches im Brührezept angegeben ist, berechnet. Das Brührezept, welches für eine identifizierte Kaffeebohnensorte spezifisch ist, wird aus einem lokalen Speicher oder einer entfernten Datenbank von Brührezepten abgerufen. Das Identifizieren einer Kaffeebohnensorte kann mittels einer Kennung erfolgen, die auf einer Verpackung aufgebracht ist.

Ein computerimplementiertes Verfahren zum Steuern des Brühens eines Kaffeegetränkes auf der Basis computerlesbarer Medien zeigt die US 2014/0263780 A1.

Zum Stand der Technik hinsichtlich automatischer Brühverfahren zur Herstellung von Heißgetränken sei noch auf die US 2018/0000108 A1 sowie die WO 2018/053436 A1 aufmerksam gemacht.

Bei der Kaffeeaufbereitungsvorrichtung mit Möglichkeit des Röstens von Kaffeebohnen gemäß DE 10 2016 107 834 A1 besteht die Möglichkeit, mittels einer Steuereinrichtung die Röstvorrichtung, die Mahlvorrichtung und eine Extraktionsvorrichtung zu steuern. Dies kann auf externen Steuerinformationen beruhen. Die externen Steuerinformationen sind von der Kaffeeaufbereitungsvorrichtung empfangbar. Insofern besteht die Möglichkeit, auf eine RFID-Leseeinrichtung zurückzugreifen.

Aus dem Vorgenannten ist es Aufgabe der Erfindung, ein Verfahren zum Aufbereiten von körnigem Mahlgut oder Mahlgutmischungen mittels gesteuerter mechanischer Zerkleinerung durch ein Mahlwerk oder eine Kombination mehrerer Mahlwerke anzugeben, welches sicherstellt, dass der Mahlprozess in optimaler Weise ausgeführt wird, und zwar anhand extern vorgegebener bzw. dem Mahlgut zugehöriger Daten. Hierdurch kann eine falsche Mahlgutbehandlung im Sinne einer unkorrekten Korngröße aber auch einer unzulässig hohen Erwärmung oder sonstigen Schädigung des Mahlgutes oder einer Mahlgutmischung vermieden werden.

Bei dem Mahlgut handelt es sich insbesondere um trockenes, körniges Mahlgut wie Saaten, Hülsenfrüchte, Getreide oder Gewürze. Grundsätzlich ist aber die Erfindungslehre nicht auf ein solches Mahlgut beschränkt. Ebenso ist eine Anwendung im Hinblick auf ein ölhaltiges Mahlgut denkbar, wobei diesbezüglich das entsprechende Mahlwerk gemäß dem bekannten Stand der Technik anzupassen oder auszuwählen ist.

Die Lösung der Aufgabe der Erfindung erfolgt durch ein Verfahren gemäß der Lehre nach Anspruch 1, wobei die Unteransprüche zweckmäßige Ausgestaltungen und Weiterbildungen umfassen.

Das Verfahren dient bevorzugt zum Mahlen von körnigem Mahlgut wie Getreide in kleineren Mengen für Haushalts- und Gastronomiezwecke.

Die Vorrichtung zum Mahlen greift auf bekannte Mahlwerke zurück und ist in der Lage, drahtlos Daten von einem Datenträger, zum Beispiel einem RFID-Chip, auszulesen. Darüber hinaus weist die Vorrichtung die Möglichkeit auf, auf ein WLAN, ein GSM, UMTS oder sonstiges Funknetz zurückzugreifen, um bezogen auf den Mahlvorgang spezifische Daten in die Cloud zu übertragen, aber auch von dort herunterzuladen.

Eine vorgesehene RFID-Leseeinheit dient dazu, verpacktes, erworbenes Mahlgut oder Mahlgutmischung zu erkennen. Insofern kann in einer Ausgestaltung der Erfindung die Verpackung des Mahlgutes, zum Beispiel eine Verpackungstüte, einen RFID-Chip oder einen ähnlichen Informationsträger aufweisen.

Der RFID-Chip enthält Daten zum Mahlgut und zu dessen Verarbeitung, so dass eine automatische Steuerung der Vorrichtung hinsichtlich Mahldauer, Mahlfeinheit usw. erfolgen kann. Die Daten zum Mahlvorgang aber auch die Freigabe des Mahlvorganges selbst und Daten zum Hersteller und/oder Inverkehrbringer des Mahlgutes sind in die Cloud übertragbar. Auf der Basis der gewonnenen und ausgelesenen Daten ist eine statistische Auswertung aber auch eine Abrechnung im Sinne einer Lizenz bezogen auf das erworbene und gemahlene Mahlgut, welches mit der entsprechenden Vorrichtung verarbeitet wurde, möglich.

Es erfolgt demnach ein portionsgerechtes Verpacken des betreffenden Mahlgutes oder der betreffenden Mahlgutmischung, wobei die Mahlgutmischung rezeptbezogen zusammengestellt wird. Weiterhin erfolgt ein Speichern von ersten Daten zur Steuerung des Mahlvorganges entsprechend der Eigenschaften des Mahlgutes und/oder des Rezeptes bezüglich der Mahlgutmischung.

Darüber hinaus werden zweite Daten zum Hersteller und/oder Inverkehrbringer des Mahlgutes oder der Mahlgutmischung gespeichert. Ergänzend werden dritte Daten zur Herkunft und/oder Eigenschaften und/oder Mindestaufbrauchsfristen bzw. Haltbarkeitsinformationen bezogen auf das Mahlgut oder die Mahlgutmischung gespeichert.

Eine Datenspeichereinheit wird an der Verpackung angebracht, in die Verpackung eingebracht, auf die Verpackung aufgetragen oder mit der Verpackung verbunden, wobei die Datenspeichereinheit maschinenlesbar, insbesondere optisch oder per Funkschnittstelle auslesbar ist.

Im Anschluss erfolgt ein automatisches Aktivieren des Mahlwerkes mittels einer Mahlwerk-Steuereinheit, welche in der Lage ist, die jeweilige Datenspeichereinheit der jeweiligen Verpackung auszulesen, wenn die Verpackung in die Nähe des Mahlwerkes bzw. der Vorrichtung gelangt, die mit dem Mahlwerk ausgerüstet ist.

Auf der Basis der ausgelesenen Daten erfolgt dann ein Ausführen der mechanischen Zerkleinerung des Mahlgutes. Hierbei wird auf die ersten Daten nebst Überprüfung von Angaben gemäß den dritten Daten zurückgegriffen.

Der Mahlvorgang wird dann automatisch beendet. Dabei erfolgt eine FertigMeldung, wobei die Steuereinheit unter Nutzung der zweiten Daten den jeweiligen Mahlvorgang in einem Schreib-Lese-Speicher protokolliert.

Ausgestaltend sind die im Schreib-Lese-Speicher abgelegten Daten über eine Schnittstelle abrufbar und stehen für statistische Erhebungen und/oder zur kommerziellen, insbesondere lizenzbasierten Abrechnung zur Verfügung.

Die abgerufenen Daten werden über das Internet in einen zentralen Server überführt.

Mit dem Zuführen der Verpackung zum Mahlwerk besteht die Möglichkeit, ein automatisches Öffnen der Verpackung in der Weise vorzunehmen, dass mittels der ersten Daten die Menge des je Zeiteinheit zuzuführenden Mahlgutes bestimmt und insofern die Öffnungsgröße der Verpackung vorgegeben wird.

Die Mahlwerk-Steuereinheit steht in einer Ausgestaltung der Erfindung mit einer Eingabevorrichtung zum manuellen Beeinflussen des Mahlvorganges in Verbindung.

Darüber hinaus kann mittels eines Displays ein Visualisieren der ersten bis dritten Daten erfolgen, wobei über das Display auch der Ablauf und der jeweilige Stand des Mahlvorganges darstellbar ist.

Über das Display lassen sich auch dem Nutzer Störungen, Wartungshinweise und Informationen bezüglich der dritten Daten anzeigen.

Die Vorrichtung zum Aufbereiten von körnigem Mahlgut oder Mahlgutmischungen mittels gesteuerter mechanischer Zerkleinerung durch ein Mahlwerk oder eine Kombination von Mahlwerken geht davon aus, dass das mindestens eine Mahlwerk in einem Gehäuse befindlich ist, wobei im oder am Gehäuse ein Mahlgut-Aufgabebehälter und eine Mahlwerk-Steuereinheit vorgesehen sind. Die Mahlwerk-Steuereinheit verfügt über eine erste Schnittstelle zum drahtlosen Einlesen von Daten aus einem externen Datenspeicher.

Weiterhin ist eine zweite Schnittstelle zur Verbindung mit einem WLAN, einem Telekommunikationsnetz oder dergleichen ausgebildet, um Daten zu einem externen Server zu übertragen.

Die Vorrichtung verfügt auch über eine Bedien- und Displayeinheit zur manuellen Dateneingabe sowie zur Daten- und/oder Funktionsanzeige. Über die erwähnte WLAN-Schnittstelle aber auch die Möglichkeit des Aufbaus einer Bluetooth-Verbindung zu einem mobilen Telekommunikationsgerät kann über eine dort installierbare Applikationssoftware eine individuelle Auswertung von Mahlvorgängen, eine Sammlung von Rezepten, eine Bewertung des Mahlgutes oder ähnliches vorgenommen werden.

In einer bevorzugten Ausgestaltung der Erfindung ist am oder im Mahlgut-Aufgabetrichter eine Einrichtung zum gezielten Ausbilden einer Öffnung in einer Mahlgutverpackung ausgebildet. Bei dieser Öffnung kann es sich um eine mechanische Schneideinheit handeln, die unter Rückgriff auf die Rezept- oder Mahlgut-spezifischen Daten die Öffnungsgröße definiert, so dass nur die Menge Mahlgut aus der Verpackung über den Aufgabetrichter in das Mahlwerk gelangt, die je Zeiteinheit unter der gewünschten Qualität verarbeitbar ist.

Bei einer alternativen Ausführungsform der Vorrichtung wird das entsprechende Verpackungsgebinde mit seinem Inhalt komplett dem Mahlgut-Aufgabetrichter zugeführt. Am ausgabeseitigen Ende des diesbezüglichen Trichters ist bei dieser Ausführungsform eine verstellbare, blendenähnliche Öffnung vorhanden, um diesbezüglich den Zufluss des Mahlgutes bzw. der jeweiligen Mahlgutmischung entsprechend der Mahlguteigenschaften zu steuern.

Die Vorrichtung führt in Verbindung mit dem vorgestellten Verfahren zu einer besonders anwendungsfreundlichen Lösung beim Zerkleinern von körnigem Mahlgut, wobei der Mahlerfolg und damit die Qualität des behandelten Mahlgutes gesichert ist. Fehlbedienungen sind erfindungsgemäß ebenso ausgeschlossen wie die Verarbeitung von ungeeigneten oder solchen Mahlgütern, deren Haltbarkeit überschritten ist.

In dem Falle, wenn das oder die Mahlwerke elektromotorisch angetrieben werden, besteht erfindungsgemäß die Möglichkeit, über eine Erfassung der jeweiligen Wirkleistung des oder der Mahlwerkmotoren den Mahlvorgang zu protokollieren.

Wird hierbei festgestellt, dass Abweichungen von vorgegebenen Sollwert-Daten, d.h. abnormale Leistungsspitzen zu verzeichnen sind, kann auf einen abnormalen Mahlvorgang geschlossen werden. So ist beispielsweise erkennbar, wenn das Mahlgut Fremdprodukte aufweist oder aber Störungen im Mahlwerk selbst vorliegen. Gelangen beispielsweise im Zuge des Bereitstellens und des Verpackens von Mahlgut metallische Fremdkörper in selbiges, kann dies unter Beachtung der Auswertung von Wirkleistungsmessdaten erkannt und eine weitere Nutzung, insbesondere ein Verzehr des zerkleinerten Mahlgutes verhindert werden. Gleiches gilt für den Fall, dass bei einem beispielsweisen Mahlstein-Mahlwerk Bruchstücke in das zerkleinerte Gut gelangen.

## Patentansprüche

1. Verfahren zum Aufbereiten von körnigem Mahlgut oder Mahlgutmischungen mittels gesteuerter, mechanischer Zerkleinerung durch ein Mahlwerk oder eine Kombination mehrerer Mahlwerke mit folgenden Schritten:
- portionsgerechtes Verpacken des Mahlgutes oder der Mahlgutmischung, wobei die Mahlgutmischung rezeptbezogen zusammengestellt wird;
- Speichern von ersten Daten zur Steuerung des Mahlvorganges entsprechend der Eigenschaften des Mahlgutes und/oder des Rezeptes der Mahlgutmischung;
- Speichern von zweiten Daten zum Hersteller und/oder Inverkehrbringer des Mahlgutes oder der Mahlgutmischung sowie von dritten Daten zur Herkunft und/oder zu Eigenschaften und/oder Haltbarkeitsfristen bezogen auf das Mahlgut oder die Mahlgutmischung;
- Anbringen, Einbringen, Auftragen oder Verbinden einer Datenspeichereinheit mit der Verpackung, wobei die Datenspeichereinheit maschinenlesbar, insbesondere optisch oder per Funkschnittstelle auslesbar ist;
- automatisches Aktivieren des Mahlwerkes mittels einer Mahlwerk-Steuereinheit, welche in der Lage ist, die jeweilige Datenspeichereinheit der jeweiligen Verpackung auszulesen, wenn die Verpackung in die Nähe des Mahlwerkes verbracht ist;
- Ausführen der mechanischen Zerkleinerung des Mahlgutes oder der jeweiligen Mahlgutmischung unter Rückgriff auf die ersten Daten nebst Überprüfung von Angaben gemäß den dritten Daten, und
- automatisches Beenden des Mahlvorganges mit Fertigmeldung, wobei die Steuereinheit unter Rückgriff auf die zweiten Daten den jeweiligen Mahlvorgang in einem Schreib-Lese-Speicher protokolliert.

2. Verfahren nach Anspruch 1,
**dadurch gekennzeichnet, dass**
die im Schreib-Lese-Speicher abgelegten Daten über eine Schnittstelle abgerufen und für statistische Erhebungen und/oder zur lizenzbasierten, kommerziellen Abrechnung herangezogen werden.

3. Verfahren nach Anspruch 2,
**dadurch gekennzeichnet, dass**
die abgerufenen Daten über das Internet in einen zentralen Server überführt werden.

4. Verfahren nach einem der vorangegangenen Ansprüche,
**dadurch gekennzeichnet, dass**
mit dem Zuführen der Verpackung zum Mahlwerk ein automatisches Öffnen der Verpackung in der Weise erfolgt, dass mittels der ersten Daten die Menge des je Zeiteinheit zuzuführenden Mahlgutes bestimmt und die Öffnungsgröße vorgegeben wird.

5. Verfahren nach einem der vorangegangenen Ansprüche,
**dadurch gekennzeichnet, dass**
die Mahlwerk-Steuereinheit mit einer Eingabevorrichtung zum manuellen Beeinflussen des Mahlvorganges in Verbindung steht.

6. Verfahren nach einem der vorangegangenen Ansprüche,
**dadurch gekennzeichnet, dass**
mittels eines Displays die ersten bis dritten Daten wahlweise visualisierbar sind, wobei über das Display der Ablauf und der jeweilige Stand des Mahlvorganges dargestellt wird.

7. Verfahren nach Anspruch 6,
**dadurch gekennzeichnet, dass**
über das Display dem Nutzer Störungen, Wartungshinweise und Informationen bezüglich der dritten Daten angezeigt werden.

8. Verfahren nach einem der vorangegangenen Ansprüche,
**dadurch gekennzeichnet, dass**
das Mahlgut oder die jeweilige Mahlgutmischung Saaten, Hülsenfrüchte, Getreide, Gewürze, Nüsse oder dergleichen enthält.

## Claims

1. A method for the treatment of granular grinding stock or grinding stock mixture by way of controlled mechanical size reduction by means of a grinding mill or a combination of several grinding mills, comprising the steps of:
- correctly proportioned packaging of the grinding stock or the grinding stock mixture, wherein the grinding stock mixture is composed according to a recipe;
- storing of first data for controlling the grinding process in accordance with the properties of the grinding stock and/or the recipe of the grinding stock mixture;
- storing of second data related to the manufacturer and/or distributor of the grinding stock or the grinding stock mixture as well as of third data related to the origin and/or properties and/or minimum consumption periods or shelf life information related to the grinding stock or the grinding stock mixture;
- attaching to, inserting into, applying onto or connecting a data memory unit to the package, wherein the data memory unit is machine readable, in particular optically readable or via radio interface;
- automatically activating the grinding mill by means of a grinding mill control unit which is capable of reading out the respective data memory unit of the respective package, when the package has been transported into the proximity of the grinding mill;
- executing the mechanical size reduction of the grinding stock or the respective grinding stock mixture while resorting to the first data together with a verification of information according to the third data, and
- automatically finishing the grinding process with a finished message, wherein the control unit logs the respective grinding process in a random-access memory while resorting to the second data.

2. The method according to claim 1,
**characterized in that**
the data filed in the random-access memory is retrieved via an interface and is used for statistical surveys and/or for license-based, commercial billing.

3. The method according to claim 2,
**characterized in that**
the retrieved data is transferred into a central server via the Internet.

4. The method according to any one of the preceding claims,
**characterized in that**
in supplying the package to the grinding mill, an automatic opening of the package is performed, such that the quantity of the grinding stock to be supplied per temporal unit is determined and the opening size is predefined by means of the first data.

5. The method according to any one of the preceding claims,
**characterized in that**
the grinding mill control unit is in intercommunication with an input device for manually influencing the grinding process.

6. The method according to any one of the preceding claims,
**characterized in that**
by means of a display, the first to third data is optionally visualizable, wherein the course and the respective state of the grinding process is represented via the display.

7. The method according to claim 6,
**characterized in that**
via the display, disturbances, service instructions and information regarding the third data are displayed to the user.

8. The method according to any one of the preceding claims,
**characterized in that**
the grinding stock or the respective grinding stock mixture contains seeds, pulses, cereals, spices, nuts or the like.

## Revendications

1. Procédé de préparation de matière à broyer granuleuse ou de mélanges de matières à broyer par fragmentation mécanique commandée au moyen d'un broyeur ou d'une combinaison de plusieurs broyeurs, comprenant les étapes suivantes consistant à :
- conditionner en portions la matière à broyer ou le mélange de matières à broyer, le mélange de matières à broyer étant composé en fonction de la recette ;
- mémoriser des premières données pour la commande de l'opération de broyage en fonction des propriétés de la matière à broyer et/ou de la recette du mélange de matières à broyer ;
- mémoriser des deuxièmes données concernant le fabricant et/ou le responsable de la mise en circulation de la matière à broyer ou du mélange de matières à broyer, ainsi que des troisièmes données concernant l'origine et/ou les propriétés et/ou les délais de conservation se rapportant à la matière à broyer ou au mélange de matières à broyer ;
- monter, insérer, appliquer ou relier une unité de stockage de données à l'emballage, l'unité de stockage de données pouvant être lue par une machine, en particulier par voie optique ou par interface radio ;
- activer automatiquement le broyeur au moyen d'une unité de commande du broyeur, qui est en mesure de lire l'unité de stockage de données respective de l'emballage respectif lorsque l'emballage est amené à proximité du broyeur ;
- exécuter la fragmentation mécanique de la matière à broyer ou du mélange de matières à broyer respectif en se référant aux premières données ainsi qu'à la vérification des indications selon les troisièmes données, et
- terminer automatiquement l'opération de broyage avec message d'achèvement, l'unité de commande enregistrant l'opération de broyage respective dans une mémoire de lecture/écriture en se référant aux deuxièmes données.

2. Procédé selon la revendication 1,
**caractérisé en ce que**
les données stockées dans la mémoire de lecture/écriture sont consultées par l'intermédiaire d'une interface et utilisées pour des enquêtes statistiques et/ou pour la facturation commerciale basée sur une licence.

3. Procédé selon la revendication 2,
**caractérisé en ce que**
les données consultées sont transférées à un serveur central via Internet.

4. Procédé selon l'une des revendications précédentes,
**caractérisé en ce que**
avec l'amenée de l'emballage au broyeur, une ouverture automatique de l'emballage est effectuée de telle sorte que la quantité de matière à broyer à amener par unité de temps est déterminée au moyen des premières données et que la taille de l'ouverture est prédéfinie.

5. Procédé selon l'une des revendications précédentes,
**caractérisé en ce que**
l'unité de commande du broyeur est en liaison avec un dispositif d'entrée pour influencer manuellement l'opération de broyage.

6. Procédé selon l'une des revendications précédentes,
**caractérisé en ce que**
les premières à troisièmes données peuvent être visualisées au choix au moyen d'un écran d'affichage, le déroulement et l'état respectif de l'opération de broyage étant affichés sur l'écran d'affichage.

7. Procédé selon la revendication 6,
**caractérisé en ce que**
l'écran d'affichage affiche à l'utilisateur des dysfonctionnements, des indications de maintenance et des informations concernant les troisièmes données.

8. Procédé selon l'une des revendications précédentes,
**caractérisé en ce que**
la matière à broyer ou le mélange de matières à broyer respectif contient des graines, des légumineuses, des céréales, des épices, des noix ou similaires.
